# NEUE EUROPÄISCHE PATENTSCHRIFT

(11) **EP 2 791 483 B2**
(45) Veröffentlichungstag und Bekanntmachung des Hinweises auf die Entscheidung über den Einspruch: **28.08.2019**
(45) Hinweis auf die Patenterteilung: 01.06.2016
(21) Anmeldenummer: 12801552.6
(22) Anmeldetag: 12.12.2012
(51) Int. Cl.: F01N 3/20

(54) **REDUKTIONSMITTEL-HEIZUNG**
HEATING DEVICE FOR REDUCING AGENT
MODULE DE CHAUFFAGE POUR AGENT DE RÉDUCTION

(30) Priorität: 15.12.2011 DE 102011088659
(43) Veröffentlichungstag der Anmeldung: 22.10.2014
(73) Patentinhaber: Robert Bosch GmbH, 70442 Stuttgart (DE)
(72) Erfinder: SEMET, Jan, 73553 Alfdorf-Vordersteinenberg (DE)
(86) Internationale Anmeldenummer: PCT/EP2012/075176
(87) Internationale Veröffentlichungsnummer: WO 2013/087672

(56) Entgegenhaltungen:
- EP-A1- 2 341 224
- EP-B1- 1 777 452
- DE-A1-102005 036 430
- DE-A1-102009 012 983
- DE-A1-102009 041 938
- DE-A1-102009 046 954

## Beschreibung

Die Erfindung betrifft eine Reduktionsmittel-Heizung eines Kraftfahrzeugs zum Erwärmen eines Reduktionsmittels, insbesondere eines Reduktionsmittels für die selektive katalytische Reduktion von Stickoxiden in Abgasen eines Verbrennungsmotors des Kraftfahrzeugs, mit einem Wärmeübertragungskörper und mindestens einem darin angeordneten Heizelement, wobei der Wärmeübertragungskörper zur Vermeidung von einem direkten Kontakt mit dem Reduktionsmittel zumindest teilweise von einer Kunststoffummantelung umgeben ist. Ferner betrifft die Erfindung ein Verfahren zur Herstellung einer derartigen Reduktionsmittel-Heizung.

### Stand der Technik

Reduktionsmittel-Heizungen der eingangs genannten Art sind bekannt. Sie werden bei Abgasnachbehandlungsvorrichtungen von Kraftfahrzeugen eingesetzt. Derartige Abgasnachbehandlungsvorrichtungen dienen dazu, die durch einen Verbrennungsmotor des Kraftfahrzeugs erzeugten und in dessen Abgasen enthaltenen, schädlichen Stickoxide zu verringern. Dies wird durch den chemischen Prozess der selektiven katalytischen Reduktion erzielt. Dazu wird ein Reduktionsmittel, beispielsweise eine wässrige Harnstofflösung, mit den Abgasen vermischt, um dadurch die Stickoxide zu unschädlichem Stickstoff und Wasser zu reduzieren. Das für den chemischen Prozess notwendige Reduktionsmittel wird in einem Tank gelagert und mittels einer Pumpe über eine Leitung von dem Tank in eine Abgasleitung geleitet. Da das Reduktionsmittel bei etwa -11°C gefriert, muss es beim Betrieb des Kraftfahrzeugs bei Temperaturen unter etwa -10°C erwärmt werden, sodass ein Gefrieren verhindert wird und eine Zuführung des Reduktionsmittels in die Abgasleitung weiterhin möglich ist. Zu diesem Zweck ist die Reduktionsmittel-Heizung in dem Tank vorgesehen. Die Reduktionsmittel-Heizung umfasst einen Aluminiumkörper mit integrierten Heizelementen. Der Aluminiumkörper ist mit einem Kunststoff umspritzt, um einen direkten Kontakt von dem Reduktionsmittel mit dem Aluminiumkörper zu vermeiden. Da der Kunststoff nach dem Umspritzen einem Schwindungsprozess, d.h. einer Volumen- beziehungsweise Formänderung, unterliegt, kann es zu einer Rissbildung in der Kunststoffumspritzung und somit zu einem Versagen der Reduktionsmittel-Heizung kommen.

Aus der DE 10 2009 046954 ist es bekannt, eine Heizung in einem Reduktionsmitteltank in eine Trägerplatte zu integrieren. Eine weitere Heizung ist aus der EP 2 341 224 A1 bekannt.
Des Weiteren ist aus der DE 10 2009 041 938 A1 eine Heizungsanordnung bekannt, welche ein Grundgehäuse umfaßt, das in einem unteren Teil eines Tanks einsetzbar ist.

### Offenbarung der Erfindung

Die Reduktionsmittel-Heizung mit den Merkmalen des Anspruchs 1 weist dagegen den Vorteil auf, dass sie langfristig sicher verwendet werden kann. Dies wird erfindungsgemäß erreicht, indem der Wärmeübertragungskörper in eine für den Wärmeübertragungskörper vorgesehene Aufnahmevertiefung der vorgefertigten Kunststoffummantelung eingesetzt angeordnet ist. Die Kunststoffummantelung ist also vorgefertigt und weist eine Aufnahmevertiefung auf, in welche der Wärmeübertragungskörper einsetzbar ist. Vorzugsweise wird die Kunststoffummantelung im Spritzverfahren hergestellt. Bevorzugt handelt es sich bei dem Kunststoff um Polyethylen, insbesondere um einen HDPE-, PA- oder PP-Kunststoff. Der Wärmeübertragungskörper, in dem das mindestens eine Heizelement angeordnet ist, befindet sich in der Aufnahmevertiefung der davor hergestellten Kunststoffummantelung. Er wird in die Aufnahmevertiefung eingesetzt beziehungsweise eingeschoben. Vorzugsweise wird der Wärmeübertragungskörper in die Aufnahmevertiefung eingepresst, sodass er in dieser kraftschlüssig gehalten wird. Der Wärmeübertragungskörper besteht aus einem wärmeleitfähigen Material, insbesondere einem Metall, vorzugsweise aus Aluminium oder einer Aluminiumlegierung. Die Verwendung von Aluminium oder einer Aluminiumlegierung stellt sich als kostengünstig dar. Außerdem handelt es sich bei Aluminium beziehungsweise einer Aluminiumlegierung um ein leichtes Metall, was in Hinblick auf eine Minimierung des Gewichts der einzelnen Bauteile des Kraftfahrzeugs von Vorteil ist. Aufgrund seiner Wärmeleitfähigkeit ermöglicht der Wärmeübertragungskörper die Übertragung von durch das Heizelement erzeugter Wärme auf das Reduktionsmittel, sodass ein Gefrieren des Reduktionsmittels, beispielsweise bei einem Betrieb des Kraftfahrzeugs bei Umgebungstemperaturen, die unterhalb des Gefrierpunkts des Reduktionsmittels liegen, verhindert wird beziehungsweise das gefrorene Reduktionsmittel, beispielsweise bei einem Start des Kraftfahrzeugs, geschmolzen wird. Die den Wärmeübertragungskörper zumindest teilweise umgebende Kunststoffummantelung dient dazu, den Wärmeübertragungskörper vor dem chemisch reaktiven Reduktionsmittel zu schützen, d.h. um chemische Reaktionen zwischen dem Reduktionsmittel und dem Wärmeübertragungskörper zu verhindern, und den Wärmeübertragungskörper elektrisch zu isolieren. Durch das Einsetzen des Wärmeübertragungskörpers in die Aufnahmevertiefung der vorgefertigten Kunststoffummantelung wird ermöglicht, dass die Kunststoffummantelung nach deren Herstellungsprozess zunächst schwinden kann bevor der Wärmeübertragungskörper eingesetzt wird. Dieser Schwindungsprozess erfolgt infolge einer Abkühlung des Kunststoffs und ist abhängig von den Materialeigenschaften des Kunststoffs und beispielsweise der Wandstärke der Kunststoffummantelung. Bei dem Schwindungsprozess können sich die Abmessungen der Kunststoffummantelung, insbesondere das Volumen der Aufnahmevertiefung, verkleinern. Folglich ist bei der Herstellung der Kunststoffummantelung dieser Effekt zu berücksichtigen und insofern die Aufnahmevertiefung entsprechend groß herzustellen, sodass der Wärmeübertragungskörper später eingesetzt werden kann. Da bei den bekannten Reduktionsmittel-Heizungen die Kunststoffummantelung direkt um den Wärmeübertragungskörper gespritzt wird, kann es bei dem Schwindungsprozess zu einer Rissbildung in der Umspritzung kommen, beispielsweise aufgrund von unterschiedlichen Wärmeausdehnungskoeffizienten des Kunststoffs der Kunststoffummantelung und des Materials des Wärmeübertragungskörpers. Folglich kann das Reduktionsmittel mit dem Wärmeübertragungskörper in Kontakt treten, was zu einem Versagen der Reduktionsmittel-Heizung führen kann. Derartige Risse werden bei der erfindungsgemäßen Reduktionsmittel-Heizung verhindert, da der Wärmeübertragungskörper erst nach der Herstellung der Kunststoffummantelung und vorzugsweise nach dem vollständig erfolgten Schwindungsprozess in die Aufnahmevertiefung der Kunststoffummantelung eingesetzt wird. Dadurch werden ein langfristig sicherer Betrieb der Reduktionsmittel-Heizung und eine hohe Lebensdauer der Reduktionsmittel-Heizung erzielt.

In einer vorteilhaften Weiterbildung der Erfindung ist vorgesehen, dass die Aufnahmevertiefung formangepasst an den Wärmeübertragungskörper ausgebildet ist. Vorzugsweise ist die Aufnahmevertiefung derart gestaltet, dass sie nach dem Schwindungsprozess der Kunststoffummantelung eine der Außenkontur des Wärmeübertragungskörpers entsprechende Innenseite aufweist, sodass der Wärmeübertragungskörper in die Aufnahmevertiefung eingepresst werden kann. Dadurch wird erreicht, dass die Kunststoffummantelung in direktem Kontakt mit dem Wärmeübertragungskörper steht, wodurch eine gute Wärmeübertragung von dem Wärmeübertragungskörper auf die Kunststoffummantelung und insofern auf das Reduktionsmittel erzielt wird. Aufgrund der an den Wärmeübertragungskörper formangepassten Aufnahmevertiefung werden keine nachteiligen, wärmeisolierenden Luftkammern zwischen der Kunststoffummantelung und dem Wärmeübertragungskörper ausgebildet, die die Wärmeübertragung zwischen dem Wärmeübertragungskörper und der Kunststoffummantelung verschlechtern würden.

Vorzugsweise ist vorgesehen, dass das Heizelement als elektrisches Heizelement ausgebildet ist. Bevorzugt handelt es sich dabei um eine Widerstandsheizung, insbesondere um ein PTC-Element, also einen Widerstand mit einem positivem Temperaturkoeffizienten. Das elektrische Heizelement kann mittels einer Batterie des Kraftfahrzeugs betrieben werden. Das Heizelement ist im Innern des Wärmeübertragungskörpers angeordnet, sodass der Wärmeübertragungskörper möglichst gleichmäßig von dem Heizelement erwärmt wird und insofern die Wärme auch möglichst gleichmäßig und effizient auf das Reduktionsmittel übertragen wird. Aufgrund des elektrischen Heizelements ist es wichtig, dass der vorzugsweise aus Metall bestehende und insofern elektrisch leitfähige Wärmeübertragungskörper durch die Kunststoffummantelung elektrisch isoliert wird, um elektrische Wechselwirkungen des Reduktionsmittels mit dem Wärmeübertragungskörper zu vermeiden.

Erfindungsgemäß ist vorgesehen, dass die Aufnahmevertiefung mit dem darin eingesetzten Wärmeübertragungskörper mit mindestens einem Deckel, insbesondere einem Kunststoffdeckel, verschlossen ist. Der Wärmeübertragungskörper ist insofern vollständig von der Kunststoffummantelung und dem Deckel umgeben. Dadurch ist er nach allen Seiten elektrisch isoliert und kann nicht in Kontakt mit dem Reduktionsmittel treten. Insofern kann die Reduktionsmittel-Heizung im Inneren eines das Reduktionsmittel lagernden Tanks angeordnet und vollständig von dem Reduktionsmittel umgeben sein. Durch diese Anordnung im Tank wird eine effiziente Erwärmung des Reduktionsmittels erzielt, ohne dass dabei unerwünschte chemische Reaktionen oder elektrische Wechselwirkungen von dem Reduktionsmittel mit dem Wärmeübertragungskörper erfolgen. Vorzugsweise sind die Kunststoffummantelung und der Deckel aus dem gleichen Kunststoff gefertigt.

Vorteilhafterweise ist die Kunststoffummantelung mit konstanter Wandstärke ausgebildet. Dadurch wird eine homogene Wärmeübertragung von dem Wärmeübertragungskörper auf das Reduktionsmittel über die gesamte Kunststoffummantelung erreicht. Die Dicke der Wandstärke ist bevorzugt derart dünn gewählt, sodass eine möglichst hohe Wärmeübertragungsrate erzielt wird und gleichzeitig eine chemische und elektrische Isolierung des Wärmeübertragungskörpers sichergestellt ist.

Die Erfindung betrifft ferner ein Verfahren zur Herstellung einer Reduktionsmittel-Heizung für ein Kraftfahrzeug, die zum Erwärmen eines Reduktionsmittels, insbesondere eines Reduktionsmittels für die selektive katalytische Reduktion von Stickoxiden in Abgasen eines Verbrennungsmotors des Kraftfahrzeugs, dient, mit einem Wärmeübertragungskörper und mindestens einem darin angeordneten Heizelement, wobei der Wärmeübertragungskörper zur Vermeidung von einem direkten Kontakt mit dem Reduktionsmittel zumindest teilweise von einer Kunststoffummantelung umgeben ist. Dabei ist erfindungsgemäß vorgesehen, dass zunächst die Kunststoffummantelung mit einer Aufnahmevertiefung für den Wärmeübertragungskörper gefertigt wird und dass danach der Wärmeübertragungskörper in die Aufnahmevertiefung der Kunststoffummantelung eingesetzt wird. Vorzugsweise ist die Reduktionsmittel-Heizung nach einer oder mehreren der voranstehenden Ausführungen ausgeführt. Der Wärmeübertragungskörper wird also nach der Fertigung der Kunststoffummantelung in deren Aufnahmevertiefung eingesetzt. Dadurch ist es möglich, dass Spannungen in der Kunststoffummantelung lediglich infolge des Einsetzens des Wärmeübertragungskörpers erzeugt werden. Hingegen werden Spannungen, die durch eine Schwindung der Kunststoffummantelung auftreten, wenn diese direkt auf den Wärmeübertragungskörper aufgespritzt wird, vermieden. Dadurch werden die bereits genannte Rissbildung und ein mögliches Bauteilversagen verhindert.

In einer vorteilhaften Weiterbildung des Verfahrens ist vorgesehen, dass nach der Fertigung der Kunststoffummantelung eine Zeitdauer, insbesondere eine zur Schwindung der Kunststoffummantelung geeignete Schwindungszeitdauer, gewartet wird, bevor der Wärmeübertragungskörper in die Aufnahmevertiefung eingesetzt wird. Vorzugsweise wird mit dem Einsetzen des Wärmeübertragungskörpers in die Aufnahmevertiefung der Kunststoffummantelung derart lange gewartet, bis der Schwindungsprozess der Kunststoffummantelung vollständig beziehungsweise im Wesentlichen vollständig erfolgen konnte. Während dieses Wartens wirken vorzugsweise keine externen Kräfte auf die Kunststoffummantelung. Während des Schwindungsprozesses kann eine Volumenverringerung der Aufnahmevertiefung erfolgen. Die Beendigung des Schwindungsprozesses wird vorzugsweise durch die Abkühlung der Kunststoffummantelung auf Raumtemperatur bestimmt. Nach Beendigung des Schwindungsprozesses befindet sich das Material der Kunststoffummantelung in einem Gleichgewichtszustand. Das Volumen der Aufnahmevertiefung bleibt insofern nach Abwarten der Schwindungszeitdauer - sofern keine externen Kräfte einwirken - im Wesentlichen konstant.

Vorzugsweise wird die Kunststoffummantelung im Spritzverfahren hergestellt. Dies stellt ein einfaches und kostengünstiges Herstellungsverfahren der Kunststoffummantelung mitsamt deren Aufnahmevertiefung dar.

Vorteilhafterweise wird der Wärmeübertragungskörper in die Aufnahmevertiefung der Kunststoffummantelung eingepresst. Dadurch wird die Kunststoffummantelung sicher und kraftschlüssig auf dem Wärmeübertragungskörper gehalten. Unerwünschte Verschiebungen des Wärmeübertragungskörpers innerhalb der Aufnahmevertiefung werden also verhindert. Zudem wird durch die direkte, flächige und luftkammerfreie Anlage der Kunststoffummantelung an dem Wärmeübertragungskörper eine effiziente Wärmeübertragung von dem Wärmeübertragungskörper auf die Kunststoffummantelung und insofern auf das Reduktionsmittel ermöglicht.

Erfindungsgemäß ist vorgesehen, dass die Aufnahmevertiefung nach dem Einsetzen des Wärmeübertragungskörpers mit mindestens einem Deckel, insbesondere einem Kunststoffdeckel, verschlossen wird. Der Wärmeübertragungskörper ist insofern vollständig von der Kunststoffummantelung und dem Deckel umgeben, sodass ein direkter Kontakt des Wärmeübertragungskörpers mit dem Reduktionsmittel verhindert ist.

Ferner ist vorzugsweise vorgesehen, dass die Kunststoffummantelung und der Deckel miteinander verbunden, insbesondere miteinander verschweißt, werden. Die Verbindung der Kunststoffummantelung und des Deckels erfolgt zumindest teilsweise, vorzugsweise vollständig, entlang des Umfangs der Aufnahmevertiefung, wodurch ein unerwünschtes Eindringen des Reduktionsmittels in die Aufnahmevertiefung verhindert wird. Bevorzugt wird die Kunststoffummantelung mit dem Deckel verschweißt, insbesondere mittels Heizelement-Schweißen, Infrarotstrahlung oder unter Verwendung eines Heizglieds.

Die Zeichnungen veranschaulichen die Erfindung anhand eines Ausführungsbeispiels, und zwar zeigt die
- Figur 1: eine perspektivische Ansicht einer Reduktionsmittel-Heizung,
- Figur 2: eine Explosionsdarstellung der Reduktionsmittel-Heizung, und
- Figur 3: eine weitere Explosionsdarstellung der Reduktionsmittel-Heizung.

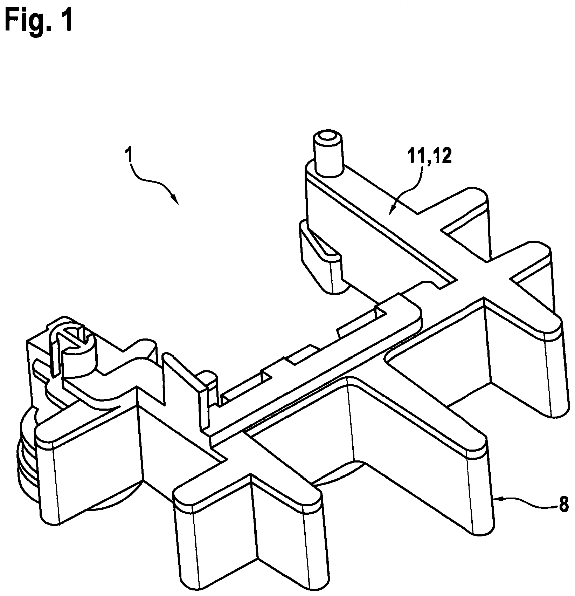

Die Figur 1 zeigt eine Reduktionsmittel-Heizung 1. Die Reduktionsmittel-Heizung 1 ist vorzugsweise in einem nicht dargestellten Tank angeordnet, in dem ein Reduktionsmittel, insbesondere eine wässrige Harnstofflösung, gelagert wird. Der Tank bildet einen Teil einer Abgasnachbehandlungsvorrichtung eines Verbrennungsmotors von einem Kraftfahrzeug. Die Reduktionsmittel-Heizung dient der Erwärmung des Reduktionsmittels in dem Tank, um einem Gefrieren von diesem aufgrund von Umgebungstemperaturen, die unterhalb des Gefrierpunkts des Reduktionsmittels, insbesondere unterhalb von etwa -11°C liegen, entgegenzuwirken beziehungsweise um ein Schmelzen von gefrorenem Reduktionsmittel, insbesondere bei einem Start des Kraftfahrzeugs, zu ermöglichen.

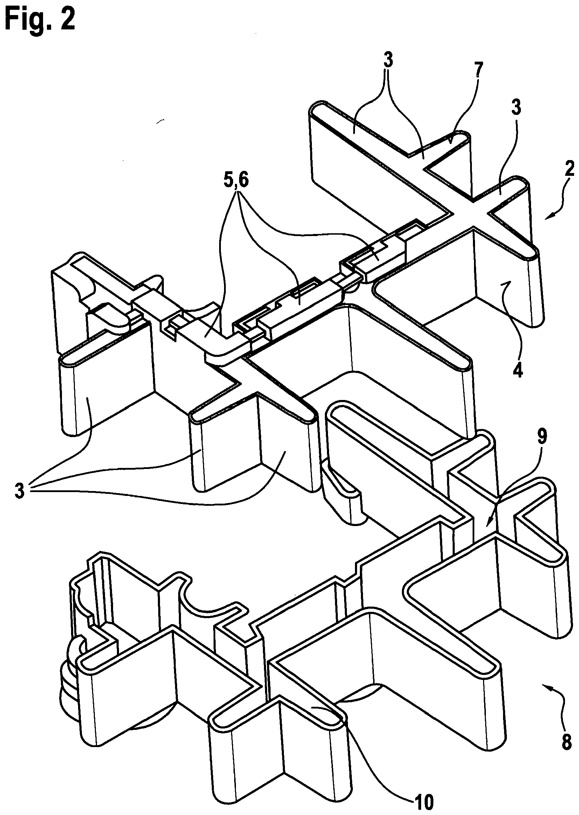

Wie in der Figur 2 zu erkennen ist, weist die Reduktionsmittel-Heizung 1 einen Wärmeübertragungskörper 2 auf. Der Wärmeübertragungskörper 2 besteht aus einem wärmeleitfähigen Material, insbesondere einem Metall, vorzugsweise aus Aluminium oder einer Aluminiumlegierung. Der Wärmeübertragungskörper 2 weist eine komplexe Rippenstruktur auf. Die Rippenstruktur besteht aus mehreren geradlinig verlaufenden Rippen 3, die rechtwinklig zueinander angeordnet sind. Vorzugsweise sind die Rippen 3 einstückig miteinander ausgebildet. Beispielsweise wird der Wärmeübertragungskörper 2 im Strangpress- oder Gussverfahren hergestellt. Aufgrund der komplexen Rippenstruktur weist der Wärmeübertragungskörper 2 eine relativ große Mantelaußenfläche 4 auf, wodurch vorteilhafterweise eine große Fläche zur Wärmeübertragung von dem Wärmeübertragungskörper 2 auf das Reduktionsmittel zur Verfügung steht, was eine effiziente Erwärmung des Reduktionsmittels ermöglicht.

Anstatt der hier dargestellten Rippenstruktur des Wärmeübertragungskörpers 3 sind auch davon abweichende Strukturen des Wärmeübertragungskörpers 2 denkbar. Insbesondere können auch bogenförmig verlaufende Rippen 3 und/oder Rippen 3, die einen spitzen oder stumpfen Winkel miteinander einschließen, vorgesehen sein.

In dem Wärmeübertragungskörper 2 sind mehrere Heizelemente 5 angeordnet, die als elektrische Heizelemente 5 ausgebildet sind. Insbesondere handelt es sich bei den Heizelementen 5 um PTC-Elemente 6. Die Heizelemente 5 ragen bis zu einer Stirnfläche 7 des Wärmeübertragungskörpers 2, sodass eine elektrische Verbindung über nicht dargestellte elektrische Leitungen mit beispielsweise einer nicht dargestellten Batterie des Kraftfahrzeugs hergestellt werden kann.

Die Reduktionsmittel-Heizung 1 umfasst außerdem eine Kunststoffummantelung 8. Die Kunststoffummantelung 8 weist eine Aufnahmevertiefung 9 auf, deren Innenseite 10 der Mantelaußenfläche 4 des Wärmeübertragungskörpers 2 entspricht. Die Kunststoffummantelung 8 weist ferner eine konstante Wandstärke auf. Die Kunststoffummantelung 8 bildet somit die komplexe Rippenstruktur des Wärmeübertragungskörpers 2 nach.

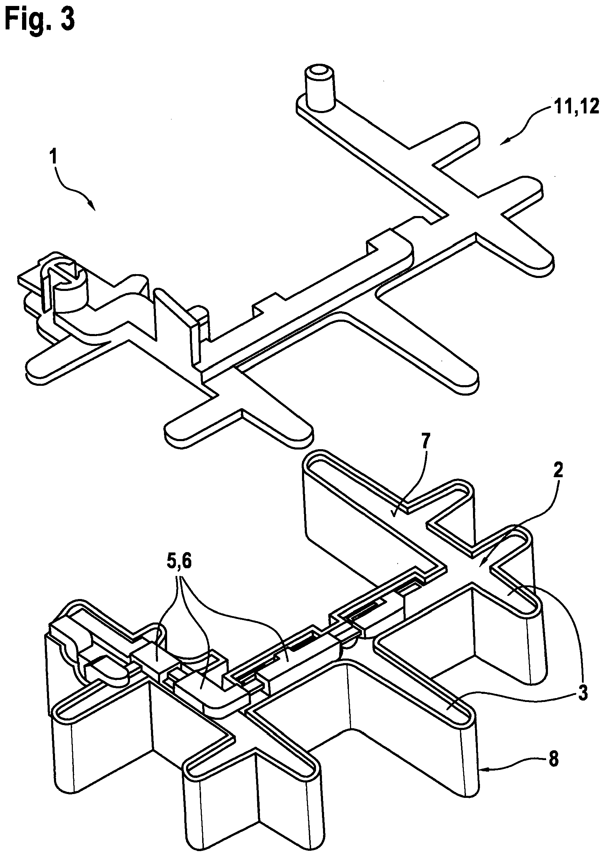

Wie in Figur 3 zu erkennen ist, weist die Reduktionsmittel-Heizung 1 ferner einen Deckel 11 auf, der als Kunststoffdeckel 12 ausgebildet ist. Bei dem Kunststoff des Deckels 11 handelt es sich vorzugweise um den gleichen Kunststoff wie dem der Kunststoffummantelung 8. Der Deckel 11 weist eine Außenkontur auf, die der Kontur der Kunststoffummantelung 8 entspricht. Insofern lässt sich mittels des Deckels 11 die Aufnahmevertiefung 9 der Kunststoffummantelung 8 verschließen.

Im montierten Zustand der Reduktionsmittelheizung 1 ist der Wärmeübertragungskörper 2 mitsamt dem darin angeordneten Heizelementen 5 eingepresst in die Kunststoffummantelung 8 angeordnet, wie in Figur 3 zu erkennen ist. Vorzugsweise ist die die Aufnahmevertiefung 9 umgebende Stirnfläche der Kunststoffummantelung 8 angeschrägt ausgebildet, um das Einschieben beziehungsweise Einpressen des Wärmeübertragungskörpers 2 in die Aufnahmevertiefung 9 zu erleichtern. Ferner ist die Aufnahmevertiefung 9 mittels des Deckels 11 vollständig verschlossen, wie aus Figur 1 ersichtlich ist. Demzufolge wird der Wärmeübertragungskörper 2 vollständig von der Kunststoffummantelung 8 und dem Deckel 11 umgeben und kann somit nicht in direkten Kontakt mit dem Reduktionsmittel treten.

Zur Herstellung der Reduktionsmittel-Heizung 1 wird folgendermaßen vorgegangen: Zunächst wird die Kunststoffummantelung 8 mit der Aufnahmevertiefung 9 im Spritzverfahren hergestellt. Danach wird die Kunststoffummantelung 8 gelagert, ohne dass dabei äußere Kräfte auf die Kunststoffummantelung 8 wirken, sodass diese vollständig beziehungsweise im Wesentlichen vollständig schwinden kann. Beispielsweise wird nach dem Spritzen der Kunststoffummantelung 8 derart lang gewartet, bis sich die Kunststoffummantelung 8 auf Raumtemperatur abgekühlt hat. Dabei können sich Spannungen in der Kunststoffummantelung 8 ungehindert abbauen. Danach wird der Wärmeübertragungskörper 2, in dem die Heizelemente 5 angeordnet sind, in die Aufnahmevertiefung 9 der Kunststoffummantelung 8 eingepresst. Vorzugsweise wurde also die Kunststoffummantelung 8 unter Berücksichtigung des Schwindungsprozesses derart hergestellt, dass nach dem Schwindungsprozess der Querschnitt der Aufnahmevertiefung 9 geringfügig kleiner als der Querschnitt des Wärmeübertragungskörper 2 ist, sodass das Einpressen ermöglicht wird. Dann wird der Deckel 11 auf die Kunststoffummantelung 8 aufgesetzt, sodass die Aufnahmevertiefung 9 verschlossen wird. Zuletzt wird der Deckel 11 mit der Kunststoffummantelung 8 verschweißt.

## Patentansprüche

1. Reduktionsmittel-Heizung (1) eines Kraftfahrzeugs zum Erwärmen eines Reduktionsmittels, insbesondere eines Reduktionsmittels für die selektive katalytische Reduktion von Stickoxiden in Abgasen eines Verbrennungsmotors des Kraftfahrzeugs, mit einem Wärmeübertragungskörper (2) und mindestens einem darin angeordneten Heizelement (5), wobei der Wärmeübertragungskörper (2) zur Vermeidung von einem direkten Kontakt mit dem Reduktionsmittel zumindest teilweise von einer Kunststoffummantelung (8) umgeben ist, wobei der Wärmeübertragungskörper (2) in eine für den Wärmeübertragungskörper (2) vorgesehene Aufnahmevertiefung (9) der vorgefertigten Kunststoffummantelung (8) eingesetzt angeordnet ist, **dadurch gekennzeichnet, dass** die Aufnahmevertiefung (9) mit dem darin eingesetzten Wärmeübertragungskörper (2) mit einem Deckel (11), der eine Außenkontur aufweist, die der Kontur der Kunststoffummantelung (8) entspricht, vollständig verschlossen ist.

2. Reduktionsmittel-Heizung nach Anspruch 1, **dadurch gekennzeichnet, dass** die Aufnahmevertiefung (9) formangepasst an den Wärmeübertragungskörper (2) ausgebildet ist.

3. Reduktionsmittel-Heizung nach einem der vorhergehenden Ansprüche, **dadurch gekennzeichnet, dass** das Heizelement (5) als elektrisches Heizelement (5) ausgebildet ist.

4. Reduktionsmittel-Heizung nach einem der vorhergehenden Ansprüche, **dadurch gekennzeichnet, dass** der Deckel ein Kunststoffdeckel (12) ist.

5. Verfahren zur Herstellung einer Reduktionsmittel-Heizung (1) eines Kraftfahrzeugs, insbesondere einer Reduktionsmittel-Heizung (1) nach einem oder mehreren der vorangegangenen Ansprüche, mit einem Wärmeübertragungskörper (2) und mindestens einem darin angeordneten Heizelement (5), wobei der Wärmeübertragungskörper (2) zur Vermeidung von einem direkten Kontakt mit dem Reduktionsmittel zumindest teilweise von einer Kunststoffummantelung (8) umgeben ist, wobei zunächst die Kunststoffummantelung (8) mit einer Aufnahmevertiefung (9) für den Wärmeübertragungskörper (2) gefertigt wird und dass danach der Wärmeübertragungskörper (2) in die Aufnahmevertiefung (9) der Kunststoffummantelung (8) eingesetzt wird, **dadurch gekennzeichnet, dass** die Aufnahmevertiefung (9) nach dem Einsetzen des Wärmeübertragungskörpers (2) mit einem Deckel (11), der eine Außenkontur aufweist, die der Kontur der Kunststoffummantelung (8) entspricht, vollständig verschlossen wird.

6. Verfahren nach Anspruch 5, **dadurch gekennzeichnet, dass** nach der Fertigung der Kunststoffummantelung (8) eine Zeitdauer, insbesondere eine zur Schwindung der Kunststoffummantelung (8) geeignete Schwindungszeitdauer, gewartet wird, bevor der Wärmeübertragungskörper (2) in die Aufnahmevertiefung (9) eingesetzt wird.

7. Verfahren nach einem der vorhergehenden Ansprüche, **dadurch gekennzeichnet, dass** die Kunststoffummantelung (8) im Spritzverfahren hergestellt wird.

8. Verfahren nach einem der vorhergehenden Ansprüche, **dadurch gekennzeichnet, dass** der Wärmeübertragungskörper (2) in die Aufnahmevertiefung (9) der Kunststoffummantelung (8) eingepresst wird.

9. Verfahren nach einem der vorhergehenden Ansprüche, **dadurch gekennzeichnet, dass** als Deckel (11) ein Kunststoffdeckel verwendet wird.

10. Verfahren nach einem der vorhergehenden Ansprüche, **dadurch gekennzeichnet, dass** die Kunststoffummantelung (8) und der Deckel (11) miteinander verbunden, insbesondere miteinander verschweißt, werden.

## Claims

1. Reducing agent heater (1) of a motor vehicle, for the purposes of heating a reducing agent, in particular a reducing agent for the selective catalytic reduction of nitrogen oxides in exhaust gases of an internal combustion engine of the motor vehicle, having a heat transfer body (2) and having at least one heating element (5) arranged in said heat transfer body, wherein the heat transfer body (2) is, in order to prevent direct contact with the reducing agent, at least partially surrounded by a plastics casing (8), wherein the heat transfer body (2) is arranged so as to be inserted into a receiving depression (9), provided for the heat transfer body (2), of the prefabricated plastics casing (8), **characterized in that** the receiving depression (9) with the heat transfer body (2) inserted therein is completely closed off by way of a cover (11) which has an outer contour which corresponds to the contour of the plastics casing (8).

2. Reducing agent heater according to Claim 1, **characterized in that** the receiving depression (9) is formed so as to be adapted in terms of shape to the heat transfer body (2).

3. Reducing agent heater according to one of the preceding claims, **characterized in that** the heating element (5) is in the form of an electrical heating element (5).

4. Reducing agent heater according to one of the preceding claims, **characterized in that** the cover is a plastics cover (12).

5. Method for producing a reducing agent heater (1) of a motor vehicle, in particular a reducing agent heater (1) according to one or more of the preceding claims, having a heat transfer body (2) and having at least one heating element (5) arranged in said heat transfer body, wherein the heat transfer body (2) is, in order to prevent direct contact with the reducing agent, at least partially surrounded by a plastics casing (8), wherein, firstly, the plastics casing (8) with a receiving depression (9) for the heat transfer body (2) is manufactured, and in that, subsequently, the heat transfer body (2) is inserted into the receiving depression (9) of the plastics casing (8), **characterized in that** the receiving depression (9) is, after the insertion of the heat transfer body (2), completely closed off by way of a cover (11) which has an outer contour which corresponds to the contour of the plastics casing (8).

6. Method according to Claim 5, **characterized in that**, after the manufacture of the plastics casing (8), a time period, in particular a shrinkage time period suitable for the shrinkage of the plastics casing (8), is allowed to elapse before the heat transfer body (2) is inserted into the receiving depression (9).

7. Method according to one of the preceding claims, **characterized in that** the plastics casing (8) is produced by injection moulding.

8. Method according to one of the preceding claims, **characterized in that** the heat transfer body (2) is pressed into the receiving depression (9) of the plastics casing (8).

9. Method according to one of the preceding claims, **characterized in that** a plastics cover is used as the cover (11).

10. Method according to one of the preceding claims, **characterized in that** the plastics casing (8) and the cover (11) are connected to one another, in particular are welded to one another.

## Revendications

1. Module de chauffage d'agent de réduction (1) d'un véhicule automobile, destiné au chauffage d'un agent de réduction pour la réduction catalytique sélective d'oxydes d'azote dans des gaz d'échappement d'un moteur à combustion interne du véhicule automobile, avec un corps de transfert de chaleur (2) et au moins un élément de chauffage (5) agencé dans celui-ci, dans lequel le corps de transfert de chaleur (2) est entouré au moins partiellement d'une enveloppe en matière plastique (8) afin d'éviter un contact direct avec l'agent de réduction, dans lequel le corps de transfert de chaleur (2) est agencé en position insérée dans un creux de réception (9) de l'enveloppe préfabriquée en matière plastique (8) prévu pour le corps de transfert de chaleur (2), **caractérisé en ce que** le creux de réception (9) avec le corps de transfert de chaleur (2) inséré dans celui-ci est complètement fermé avec un couvercle (11) qui présente un contour extérieur qui correspond au contour de l'enveloppe en matière plastique (8).

2. Module de chauffage d'agent de réduction selon la revendication 1, **caractérisé en ce que** le creux de réception (9) présente une forme adaptée au corps de transfert de chaleur (2).

3. Module de chauffage d'agent de réduction selon l'une quelconque des revendications précédentes, **caractérisé en ce que** l'élément de chauffage (5) est constitué par un élément de chauffage électrique (5).

4. Module de chauffage d'agent de réduction selon l'une quelconque des revendications précédentes, **caractérisé en ce que** le couvercle (11) est un couvercle en matière plastique (12).

5. Procédé de fabrication d'un module de chauffage d'agent de réduction (1) d'un véhicule automobile, en particulier d'un module de chauffage d'agent de réduction (1) selon une ou plusieurs des revendications précédentes, avec un corps de transfert de chaleur (2) et au moins un élément de chauffage (5) agencé dans celui-ci, dans lequel le corps de transfert de chaleur (2) est entouré au moins partiellement par une enveloppe en matière plastique (8) afin d'éviter un contact direct avec l'agent de réduction, dans lequel l'on fabrique d'abord l'enveloppe en matière plastique (8) avec un creux de réception (9) pour le corps de transfert de chaleur (2) et en ce que l'on insère ensuite le corps de transfert de chaleur (2) dans le creux de réception (9) de l'enveloppe en matière plastique (8), **caractérisé en ce que** l'on ferme complètement le creux de réception (9), après l'insertion du corps de transfert de chaleur (2), avec un couvercle (11) qui présente un contour extérieur qui correspond au contour de l'enveloppe en matière plastique (8).

6. Procédé selon la revendication 5, **caractérisé en ce qu'**après la fabrication de l'enveloppe en matière plastique (8), on attend pendant un certain temps, en particulier pendant un temps de retrait approprié pour le retrait de l'enveloppe en matière plastique (8), avant que le corps de transfert de chaleur (2) soit inséré dans le creux de réception (9).

7. Procédé selon l'une quelconque des revendications précédentes, **caractérisé en ce que** l'on fabrique l'enveloppe en matière plastique (8) par un procédé d'injection.

8. Procédé selon l'une quelconque des revendications précédentes, **caractérisé en ce que** l'on presse le corps de transfert de chaleur (2) dans le creux de réception (9) de l'enveloppe en matière plastique (8).

9. Procédé selon l'une quelconque des revendications précédentes, **caractérisé en ce qu'**un couvercle en matière plastique est utilisé en tant que couvercle (11) .

10. Procédé selon l'une quelconque des revendications précédentes, **caractérisé en ce que** l'on assemble l'un à l'autre, en particulier on soude l'un à l'autre, l'enveloppe en matière plastique (8) et le couvercle (11).
